# EUROPEAN PATENT APPLICATION

(11) **EP 4 827 106 A1**
(43) Date of publication of application: **21.10.2026**
(21) Application number: 26167551.6
(22) Date of filing: 25.03.2026
(51) Int. Cl.: H04N 23/745, H04N 23/70, H04N 23/71, G06T 5/00, G06T 5/50, G06T 5/60

(54) **METHOD AND SYSTEM FOR CORRECTING FLICKER IN CAMERA-CAPTURED IMAGES**

(30) Priority: 15.04.2025 US 202519179566
(71) Applicant: Varjo Technologies Oy, 00100 Helsinki (FI)
(72) Inventor: Peuhkurinen, Ari, 00100 Helsinki (FI); Ollila, Mikko, 00100 Helsinki (FI)
(74) Representative: Moosedog Oy

(57) **Abstract**

Disclosed is a computer-implemented method for correcting flicker in camera-captured images. The method comprises receiving two or more images (404, 406) of a real-world environment that are captured by at least one camera (204, 316, 318); analysing at least one of: brightness variations, colour variations, contrast variations, in the two or more images for identifying presence of a flicker in said images; generating flicker information pertaining to the identified flicker, based at least one on said analysis, wherein the flicker information comprises at least one of: a frequency, an amplitude, a phase, a location, of the flicker; and applying a correction technique on at least one image (406) amongst the two or more images for generating at least one corrected image (406'), based on the flicker information.

## Description

### TECHNICAL FIELD

The present disclosure relates to computer-implemented methods for correcting flicker in camera-captured images. Moreover, the present disclosure relates to systems for correcting flicker in camera-captured images.

### BACKGROUND

Video see-through (VST) technology is widely employed in extended-reality (XR) systems such as augmented-reality (AR) systems, mixed reality (MR) systems, and similar. In such XR systems, users are provided a view of their real-world surroundings through a VST system comprising one or more cameras. Images captured by the one or more cameras are digitally processed and displayed to the user, optionally, along with virtual content overlaid on said images. In real-world scenarios, artificial lighting is commonly used to illuminate scenes, but due to its inherent flickering behavior, the artificial lighting can introduce visual distortions in captured images. Such flickering effect results in fluctuating brightness levels across frames, which can degrade image clarity and disrupt real-time applications that require smooth and stable visuals. Typically, the flickering or breathing effect arises due to an interaction between the camera's exposure settings and a frequency of a light source illuminating the scene.

Conventionally, most artificial light sources, such as light-emitting diodes (LED) or fluorescent lights, operate at a specific frequency (i.e., usually 50 Hertz (Hz) or 60 Hz, depending on regional electrical standards). These lights don't emit a continuous, steady stream of light; instead they flicker rapidly in synchronization with an alternating current (AC) power cycle. Typically, a camera captures frames at a certain rate (i.e., a frame rate) and exposes each frame for a specific duration (i.e., an exposure time). However, if the camera's exposure duration doesn't perfectly align with the frequency of the light source, the amount of light captured can vary from frame to frame. Similarly, if the camera's frame rate and shutter speed are not synchronized with the light's frequency, some frames may capture the light at its peak brightness while others capture it during its dim phase. This variation in light intensity between frames is perceived as flickering in a captured video. When the light intensity fluctuates smoothly across a range of frames, it creates a breathing effect, where the brightness appears to pulsate rather than abruptly flicker. For example, the camera may be capturing at 30 frames per second (fps), and the light source operates at 60 Hz. Over two light cycles, 60 Hz is equal to 1/60th of a second, the camera captures one frame. The brightness of light during that frame may differ depending on where in the cycle the exposure starts, causing noticeable discrepancies in lighting, particularly in scenes where consistent lighting is expected, such as a studio setup.

Conventionally, existing solutions to mitigate flickering in VST systems have primarily relied on synchronizing the camera's frame rate and exposure time with the frequency of the artificial light source. For example, many cameras are optimized for standard frame rates, such as 24 frames per second (fps), 30 fps, or 60 fps. However, if the frequency of the light doesn't match a standard multiple of the frame rate, alignment may be difficult without custom settings. Moreover, some cameras have limited shutter speed options, which may not precisely match the light source frequency. For example, achieving a shutter speed of exactly 1/50 or 1/60 may not always be supported. Furthermore, if multiple light sources in a given scene operate at different frequencies, aligning with one frequency can worsen flickering from others. For example, combining natural sunlight with artificial lights may create a mismatch. Furthermore, reflections or spills from other light sources may introduce unwanted frequencies, making synchronization more complex. Furthermore, when a light source uses Pulse Width Modulation (PWM) to control brightness, or employs non-linear light dimming, it is hard to align the camera settings effectively. Furthermore, when imaging at higher frame rates (such as 120 fps or more), aligning exposure with light frequency becomes challenging, as shorter exposure times per frame make the flicker more pronounced.

Therefore, in light of the foregoing discussion, there exists a need to overcome the aforementioned drawbacks.

### SUMMARY

The aim of the present disclosure is to provide a computer-implemented method and a system that effectively corrects flicker in camera-captured images to achieve enhanced visual clarity, consistency, and accuracy in said images in a computationally efficient manner. The aim of the present disclosure is achieved by a computer-implemented method and a system for correcting flicker in camera-captured images, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates steps of a computer-implemented method for correcting flicker in camera-captured images, in accordance with an embodiment of the present disclosure;
FIG. 2 illustrates a block diagram of a system for correcting flicker in camera-captured images, in accordance with an embodiment of the present disclosure;
FIG. 3 illustrates an exemplary schematic illustration of a real-world environment where a system for correcting flicker in camera-captured images is used, in accordance with an embodiment of the present disclosure; and
FIG. 4 illustrates an exemplary illustration of how a correction technique is applied for correcting flicker in camera-captured images, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a computer-implemented method for correcting flicker in camera-captured images, said method comprising:
receiving two or more images of a real-world environment that are captured by at least one camera;
analysing at least one of: brightness variations, colour variations, contrast variations, in the two or more images for identifying presence of a flicker in the two or more images;
generating flicker information pertaining to the identified flicker, based at least one on said analysis, wherein the flicker information comprises at least one of: a frequency, an amplitude, a phase, a location, of the flicker; and
applying a correction technique on at least one image amongst the two or more images for generating at least one corrected image, based on the flicker information.

In a second aspect, the present disclosure provides a system for correcting flicker in camera-captured images, the system comprising at least one processor configured to:
receive two or more images of a real-world environment that are captured by at least one camera, wherein the at least one processor is communicably coupled to the at least one camera;
analyse at least one of: brightness variations, colour variations, contrast variations, in the two or more images to identify presence of a flicker in the two or more images;
generate flicker information pertaining to the identified flicker, based at least one on said analysis, wherein the flicker information comprises at least one of: a frequency, an amplitude, a phase, a location, of the flicker; and
apply a correction technique on at least one image amongst the two or more images to generate at least one corrected image, based on the flicker information.

In a third aspect, the present disclosure provides a computer program product comprising a non-transitory machine-readable data storage medium having stored thereon program instructions that, when executed by at least one processor, cause the at least one processor to implement steps of the computer-implemented method of the first aspect.

The present disclosure provides the aforementioned computer-implemented method, the aforementioned system, and the aforementioned computer program product for correcting flicker in the camera-captured images. It will be appreciated that the computer-implemented method for correcting flicker in the camera-captured images provides an automated and efficient approach to enhancing image quality. Beneficially, the method enables real-time or post-processing correction of the flicker (i.e., unwanted fluctuations in a brightness, a color, or a contrast in an image or a video), which may arise due to artificial lighting conditions, thereby improving visual consistency across the two or more images. Moreover, by generating the flicker information based on an analysis of the at least one of: the brightness variations, the color variations, the contrast variations, in the two or more images, the method provides a robust framework for identifying and characterizing flicker patterns. Additionally, the use of the correction technique adjusted to the flicker information ensures that correction process is adaptive and optimized for varying flicker conditions, thereby preserving image details and color fidelity.

Furthermore, it will be appreciated that the system for correcting flicker in the camera-captured images provides a hardware-implemented solution that enables seamless integration with camera devices, including those used in extended reality (XR), robotics, drones, medical imaging, heads-up displays (HUDs), and similar. Beneficially, the system is configured to process the two or more images in real-time, leveraging the at least one processor to execute flicker analysis and correction without requiring significant computational overhead. Herein, the at least one processor being communicably coupled to the at least one camera, the system ensures efficient data acquisition and processing, thereby minimizing latency in flicker correction. The ability of the system to generate the flicker information, including the frequency, the amplitude, the phase, and the location, allows for precise correction, resulting in improved image clarity and reduced visual discomfort for users in various applications. The system and the method are fast, robust, easy to implement, and facilitate efficient flicker correction with minimal computational overhead, ensuring high-quality image consistency across varying lighting conditions.

The computer-implemented method described herein involves a plurality of processing steps (described in detail below), and is implemented by the at least one processor, for effectively correcting the flicker in the camera-captured images. Said correction is performed so that visual artifacts caused by the flicker are minimized or eliminated, ensuring consistent brightness, color, and contrast across the at least one image among the two or more images. Herein, the two or more images could be captured by any camera, and not just a video see-through (VST) camera of a head-mounted device. Examples of the processor may include, but are not limited to, a microprocessor, a microcontroller, a complex instruction set computing (CISC) microprocessor, a reduced instruction set computing (RISC) microprocessor, a very long instruction word (VLIW) microprocessor, or any other type of processing circuit.

Throughout the present disclosure, the two or more images of the real-world environment are received by the at least one processor, from the at least one camera. The at least one processor is communicably coupled to the at least one camera via a wired communication network and/or a wireless communication network. When capturing the two or more images, the at least one camera operates according to predefined or adaptive settings, including exposure time, frame rate, and white balance, which may influence the presence of the flicker. The at least one camera captures the two or more images sequentially or simultaneously under prevailing lighting conditions, wherein variations in the brightness, the color, the contrast, and similar, may indicate the flicker. The camera captured images are then transmitted to the at least one processor, which processes them to detect and correct the flicker based on an analysis of temporal and/or spatial variations. A technical effect of receiving the two or more images allows for robust flicker detection and correction, leading to improved image quality, reduced visual artifacts, and enhanced user experience.

Throughout the present disclosure, the term *"flicker"* refers to a temporal variation in brightness, color, and/or contrast in at least one image amongst the two or more images that occurs due to periodic fluctuations in illumination intensity from artificial light sources or inconsistencies in the at least one camera's exposure settings. The flicker may manifest as visible oscillations or banding patterns across sequentially captured images, resulting from interaction between the at least one camera's frame rate and a frequency of an illumination source. Such variations can degrade image quality, introduce artifacts, and impair visual consistency, particularly in applications involving real-time image processing, extended reality (XR), medical imaging, computer vision, and similar. Herein, the at least one processor is configured to analyse the two or more images by computing the at least one of: the brightness variations, the color variations, the contrast variations over time and/or across spatial regions. Such analysis may involve statistical computations, frequency-domain techniques (for example, Fourier Transform, and similar), or machine learning algorithms trained to detect the flicker patterns. The variations mentioned above depend on how camera's exposure cycle align with at least one light source's oscillation cycle. In this regard, the at least one processor extracts relevant image features, compares pixel intensities across frames, and identifies periodic fluctuations indicative of the flicker.

Herein, a flickering light source may cause the intensity of certain regions in the two or more images to oscillate, with noticeable brightness changes over time. For example, a fluorescent light flickering may cause alternating regions of the two or more images to appear brighter or dimmer, potentially corresponding to a power cycle frequency of the light (such as a 50 Hertz (Hz) or 60Hz flicker). Moreover, for the color variations, a light source operating at a fluctuating frequency can result in periodic changes in the color balance of the two or more images. For example, a flickering LED light may cause a color temperature to shift between warm and cool tones intermittently, which can be detected by analyzing red, green, blue (RGB) channels over time. Furthermore, changes in the contrast may also reveal the presence of the flicker, especially in areas of the two or more images illuminated by a light source that is fluctuating in brightness. As the light flickers, the contrast between light and shadowed areas could periodically change, creating artifacts that are detectable by comparing pixel values across frames.

A technical effect of analyzing the at least one of: the brightness variations, the color variations, the contrast variations is that it ensures an accurate detection of the flicker, enabling precise correction in later processing stages. Such an approach ensures adaptive flicker detection across varying lighting conditions, making it suitable for real-time and post-processing applications in diverse imaging environments.

Optionally, the flicker in the two or more images corresponds to a representation of at least one of: a light source, a reflection of the light source, an object or its portion illuminated by the light source, a shadow of the object or its portion illuminated by the light source, in the two or more images. In this regard, the term *"light source"* refers to any object or a device that emits light, in a form of an electromagnetic radiation within a visible spectrum, which is perceptible to a human eye. The light source may include, but are not limited to, natural sources, such as a sun or a fire, and artificial sources, such as light bulbs, light-emitting diodes (LEDs), or any other man-made illumination systems. The light source can vary in its characteristics, such as an intensity, a color temperature, and spatial distribution of the emitted light. In the flicker detection and correction, the light source is often a primary origin of the flickering effect, which can influence an appearance of objects or scenes illuminated by it.

Herein, the flicker in the two or more images may correspond to a representation of the light source itself. The flicker can occur due to fluctuations in the intensity or other properties of the emitted light. These fluctuations may arise from a power supply, characteristics of the light source, or external factors affecting an emission of the light. In this regard, the at least one processor identifies the presence of the flicker by analysing periodic variations in the brightness or color of the two or more images, which corresponds to changes in the emitted light from the light source. It will be appreciated that detecting the flicker in the light source itself allows for correction of artifacts caused directly by unstable light emissions.

Optionally, the flicker in the two or more images may be observed in reflections of the light source. When the light source illuminates a surface, the reflected light may exhibit flicker patterns corresponding to the fluctuations in an intensity of the light emitted from the light source. This is particularly noticeable when the reflective surface is glossy or highly specular. In such a case, the at least one processor analyses changes in a brightness, a color, and a contrast in regions of the two or more images corresponding to the reflections. These variations in the reflected light intensity may reveal flicker patterns, which can be corrected to ensure that visual consistency of the at least one image amongst the two or more images remains stable, despite underlying instability of the light source.

Optionally, the flicker in the two or more images corresponds to variations in the illumination of the object or a part of it by the light source. For example, a wall lit by a flickering fluorescent bulb has varying brightness across multiple images. If the light source experiences the flicker, the illumination of the object or its portion will also flicker. This effect can cause noticeable visual inconsistencies in the two or more images, especially in areas where the lighting changes rapidly. In such a case, the at least one processor identifies these variations in lighting intensity and uses them to detect the flicker in the object's appearance. This is important because a visual perception of the object will change as the light flickers, leading to unwanted effects such as flashing or uneven lighting in the two or more images. It will be appreciated that by analysing the brightness, the color, and the contrast of the object and correcting for these fluctuations, the at least one processor can restore a consistent and stable image representation of the object.

Optionally, the flicker may also correspond to the shadow of the object or its portion, which is influenced by the fluctuations in the light source's intensity. For example, a person's shadow under a flickering streetlight can have varying brightness or contrast across multiple images. Since shadows are cast based on the direction and intensity of light, any flicker in the light source can cause the shadow to vary in terms of its sharpness, position, or intensity. These variations can be captured in the two or more images, causing the flicker that affect overall visual coherence. In such a case, the at least one processor is configured to detect changes in the shadow's characteristics (such as a brightness, a shape, an intensity, and similar) and correlates them to the flickering light source. It will be appreciated that correcting for these flicker-induced variations ensures that shadows appear stable, preventing unwanted artifacts that could distract from an intended visual experience.

A technical effect of the aforementioned feature is that it enables the identification and correction of the flicker in various elements of the two or more images, thereby improving overall image quality and visual consistency in dynamic lighting environments.

Throughout the present disclosure, the term *"flicker information"* refers to information that characterizes presence and properties of the flicker within the camera-captured images. The flicker information encompasses parameters such as the frequency (i.e., a rate at which the flicker occurs), the amplitude (i.e., an intensity or a strength of the flicker), the phase (i.e., a timing relationship of the flicker over time), the location (i.e., spatial regions within the two or more images where the flicker is observed), and similar. Herein, the at least one processor is configured to generate the flicker information by processing the results of the analysis of the two or more images. Based on the analysis of the at least one of: the brightness variations, the color variations, the contrast variations over time or across spatial regions, the at least one processor identifies periodic fluctuations that are indicative of the flicker in the two or more images. Once the flicker patterns are identified, the at least one processor extracts specific features or characteristics that are used to generate the flicker information. Such an approach includes computing the at least one of: the frequency, the amplitude, the phase, the location of the flicker. Using the identified patterns, the at least one processor generates the flicker information by applying relevant algorithms or models to compute each parameter. The at least one processor may use frequency-domain analysis methods, such as Fourier Transform, and similar, to calculate how often the flicker occurs within a given time period. Moreover, the at least one processor may analyse the intensity of fluctuations in pixel values across the two or more images, representing the strength of the flicker. Furthermore, the at least one processor may track the timing and phase shifts in the flicker, to determine synchronization or offset of the flicker over time. Furthermore, the at least one processor may identify the spatial regions where the flicker is present by analysing pixel-level variations in the two or more images, allowing for detection of the flicker's distribution. A technical effect of generating the flicker information is that it enables precise characterization of the flicker in the two or more images, providing detailed and accurate data on its frequency, the amplitude, the phase, the location, and similar. Such an approach allows for adaptive and effective correction of the flicker, thereby improving quality and consistency of the at least one corrected image.

Throughout the present disclosure, the term *"correction technique"* refers to a computational method or an algorithm applied to the at least one image amongst the two or more images to mitigate or remove undesirable artifacts, such as the flicker, that affects a visual quality. The correction technique involves processing the at least one image based on specific parameters derived from the flicker information. The correction technique is designed to be adaptive, with the ability to adjust based on the identified characteristics of the flicker in the two or more images. The term *"corrected image"* refers to an image that has undergone processing to remove or reduce the flicker, resulting in an improved visual quality. The at least one corrected image is generated through the application of the correction technique, which alters pixel values or modifies temporal and spatial characteristics to restore the at least one image to a more natural and consistent state. In any corrected image, the undesired effects due to the flicker, which may be caused by lighting conditions or camera settings, are minimized or eliminated. Notably, the at least one corrected image represents a stable and realistic visual depiction of a scene, free from perceptible flicker distortions. The at least one corrected image ensures that a user (namely, a viewer) perceives a content more naturally and accurately.

After the flicker information is generated, the at least one processor is configured to apply the correction technique to the at least one image amongst the two or more images. This technique may involve filtering, interpolation, signal processing methods, and similar, that adjust pixel values, smooth out fluctuations, and/or correct the temporal and spatial inconsistencies introduced by the flicker. The correction technique could be based on specific features derived from the flicker information (e.g., reducing intensity fluctuations, synchronizing phase shifts, correcting spatial artifacts, or similar). The correction process may be applied either in real-time (i.e., for an immediate image correction) or during post-processing stages (i.e., after the two or more images have been captured, allowing for a more comprehensive analysis and correction of the flicker without time constraints). It will be appreciated that applying the correction technique on the at least one image minimizes processing resource requirements and processing time, which is particularly beneficial when the camera-captured images are to be utilized for real-time applications, when the system is hardware-constrained. A technical effect of applying the correction technique is that it enhances quality of the at least one image by reducing or eliminating flicker-induced artifacts. Such an approach results in visually consistent, high-quality images with reduced temporal and spatial distortions.

Optionally, the step of applying the correction technique comprises employing at least one of:
an image correction algorithm,
a model trained at least for flicker correction,
a neural network trained at least for flicker correction,
for reducing the flicker in the at least one image.

In this regard, employing at least one of the aforesaid advanced correction mechanisms ensures precise flicker correction in the at least one image to effectively rectify unwanted variations caused by the flicker. This correction is essential for producing the at least one corrected image where flicker artifacts are minimized or eliminated, ensuring a smoother visual representation, which is particularly important in applications where consistent image quality is critical, such as video monitoring or photography in varying lighting conditions. Moreover, any one or a combination of the aforesaid advanced correction mechanisms can be easily employed according to a configuration of the system.

It will be appreciated that the image correction algorithm can be a pixel-based algorithm, a machine-learning based algorithm (such as a kernel algorithm, and similar) or a block-based algorithm. The image correction algorithm may apply the correction technique on a portion of the at least one image or on an entirety of the at least one image. The image correction algorithm provides a deterministic correction mechanism which applies the correction technique based on predefined logic (for example, predefined rules and/or transformations). Herein, the at least one processor is configured to employ the image correction algorithm by analyzing pixel values across time and space in the two or more images. The image correction algorithm adjusts these values, using methods such as temporal smoothing, noise reduction, and similar, to mitigate the impact of the flicker and improve image consistency.

Optionally, the at least one processor is configured to employ the model trained at least for the flicker correction. This model would have been trained on a dataset containing examples of both flickering and non-flickering images. When applied to the at least one image amongst the two or more images, said model utilizes learned patterns to identify and remove the flicker. Said model could employ traditional machine learning techniques to adjust pixel intensities or other image features. Optionally, the at least one processor is configured to employ the neural network (such as a convolutional neural network, or other architectures) to learn specific features that indicate the flicker in the two or more images. During inference, the neural network can automatically adjust the at least one image to remove the flicker based on these learned features. The use of neural networks, particularly with large datasets, allows for more adaptive, robust, and accurate flicker correction. Optionally, the neural network is at least one of: a convolutional neural network (CNN), a Residual Network (ResNet), a You Only Look Once (YOLO)-based neural network. Optionally, the model and/or the neural network can also be employed for analysing the at least one of: brightness variations, colour variations, contrast variations, in the two or more images. Furthermore, the model and/or the neural network can also be employed to implement other functionalities.

A technical effect of employing the at least one of the aforesaid correction technique mechanisms is that it enables efficient and adaptive reduction of the flicker across varying image conditions, thereby improving image quality, consistency, and visual clarity. Such an approach results in smoother and more accurate image representations, particularly in dynamic or challenging lighting environments.

In an embodiment, the computer-implemented method further comprising training the model using a training dataset comprising
erroneous images having reference flicker present therein, and
ground truth images corresponding to the erroneous images,
wherein said training comprises employing a supervised learning technique for determining one or more flicker correction adjustments, which when applied to the erroneous images, mitigate the reference flicker to make the erroneous images consistent with their corresponding ground truth images.

In this regard, the term *"training dataset"* refers to a collection of data used to train a machine learning model, particularly in supervised learning scenarios. Herein, the training dataset comprises the two or more images, including both the erroneous images with the flicker and their corresponding ground truth images that represent a desired output without the flicker. The training dataset is used to adjust the model's parameters during the training process to minimize errors between a predicted output and an actual ground truth. It will be appreciated that by training the model using the training dataset, said model learns to identify which adjustment to apply to the erroneous images, for removing the flicker and making the erroneous image match a corresponding ground truth image.

Moreover, the term *"erroneous image"* refers to an image that contains undesirable artifacts or errors, such as flicker, noise, distortions, and similar, which impair their quality or consistency. In the flicker correction, the erroneous images are those in which the flicker has been introduced by factors like varying lighting conditions, camera settings, or other environmental influences. These images serve as an input data in training the model, which learns to identify and correct the flicker in these images to generate a visually consistent output. Moreover, the term *"ground truth image"* refers to a high-quality reference image used as a target or a desired output in supervised learning. The ground truth images are free from the flicker and represent an accurate, corrected state of the erroneous images. The ground truth images provide a standard for training machine learning models, allowing the model to learn the corrections required to transform the erroneous image into an artifact-free version. In the flicker correction process, the ground truth images are used to train the model by comparing the predicted output to these corrected images, thus guiding the model to make appropriate adjustments during training.

In this regard, the model learns to accurately identify inaccuracies in the erroneous images and precisely determine which flicker correction adjustment(s) to apply to the erroneous images (by the correction technique), to make the erroneous images match their corresponding ground truth images. The supervised learning technique enables this learning. Therefore, upon training, when the model is provided a new erroneous image (i.e., an erroneous image which was not a part of the training dataset), the trained model correctly applies requisite flicker correction adjustments for mitigating the flicker in the two or more images. A technical effect of the aforementioned feature is that the model, once trained, can automatically and accurately mitigate the flicker in new images by applying learned correction adjustments, thereby ensuring consistent image quality across varying lighting conditions and environmental factors. Moreover, such an approach allows for scalable and efficient flicker correction in real-time or post-processing stages, ensuring a consistent visual experience in image processing systems.

Optionally, the computer-implemented method further comprises training the neural network at least for flicker correction, wherein upon training, the neural network implements the step of applying the correction technique by:
identifying a set of features in the at least one image which relate to the flicker;
reducing a spatial dimension of the at least one image while retaining one or more features amongst the set of features in the at least one image;
processing the one or more features for learning spatial and contextual relationships therebetween and how said relationships impact flicker correction; and
applying one or more corrections that enable the flicker correction, on the at least one image, based on said relationships and their impact on the flicker correction.

In this regard, the neural network could be trained using either a supervised learning technique or an unsupervised learning technique, or a combination thereof. Optionally, the features of the set comprise at least one of: intensity variations, temporal inconsistencies, spatial patterns indicative of the flicker, frequency components associated with the flicker, chromatic shifts caused by lighting fluctuations. Each of these types of features impact the flicker reproduction in the camera-captured images. The object of interest could be a specific region within the at least one image where the flicker artifacts are prominent, such as a subject under artificial lighting, a display screen, any illuminated area affected by periodic brightness variations, and similar. For example, the real-world environment may be an indoor setting with fluorescent lighting, an outdoor scene with variable natural light, and an electronic display emitting periodic luminance fluctuations, may belong to the set of features.

Furthermore, the phrase *"reducing the spatial dimension"* refers to reducing a two-dimensional spatial representation of the at least one image (i.e., reducing a height and/or a width of the at least one image in terms of pixels). Optionally, the spatial dimension of the at least one image is reduced by employing at least one of: convolutional layers, pooling layers, strides, in the neural network. Said reduction allows the neural network to focus on patterns of flicker reproduction and spatial-geometric features to retain only those one or more features which are critical for understanding flicker discrepancies, instead of processing every pixel individually. Said reduction may be performed for achieving computational efficiency improvement, and for removing redundant features for improvement of processing accuracy. Next, by optionally learning the spatial and contextual relationships between the one or more features and how said relationships impact the flicker reproduction, the trained neural network accurately determines the one or more corrections which improve the flicker in the at least one image. The at least one corrected image generated upon applying the one or more corrections to the at least one image amongst the two or more images, exhibits reduced flicker and enhanced visual consistency compared to an uncorrected image.

Optionally, the model and/or the neural network can also be employed for analysing the image properties indicative of the flicker in the camera-captured images. Furthermore, the model and/or the neural network can also be employed to implement other functionalities. Such implementations enable effective usage of complex specialised processing resources like the model and/or the neural network, for multiple processing tasks.

A technical effect of the aforementioned feature is that by training the neural network to identify and process essential features related to the flicker, enables accurate and efficient flicker correction in the at least one image, resulting in visually consistent outputs. Such an approach enhances the quality of images and videos, improving visual consistency in various applications, including real-time imaging, surveillance, and photography under dynamic lighting conditions.

Optionally, the computer-implemented method further comprising:
receiving capture information indicative of camera settings employed in the at least one camera for capturing the two or more images, wherein a camera setting comprises at least one of: an exposure setting, a gain setting, a white balance setting, a focus distance setting, an Image Signal Processing (ISP) setting, an ISP algorithm; and
receiving lighting information indicative of at least an operational frequency of one or more light sources in the real-world environment,
wherein the step of generating the flicker information is based also on the capture information and the lighting information.

In this regard, the term *"camera setting"* refers to a parameter which affects how a camera captures image data and/or processes the image data to generate an image. Each of these camera settings directly affect the image quality, appearance, and the behavior of the flicker within the camera-captured images (i.e., the at least two images). Using different camera settings for capturing the at least two images leads to accurate identification of the flicker that needs to be corrected. Moreover, the term "*exposure setting"* encompasses at least one of: an ISO sensitivity setting, an exposure time setting, and an aperture setting. The exposure setting determines an amount of light that reaches an image sensor of the at least one camera. For example, the image sensor may include, but are not limited to, a red, green, blue (RGB) sensor, a monochrome (BW) sensor, and a charge-coupled device (CCD) sensor, configured to capture images under varying exposure settings, frame rates, and lighting conditions. The exposure setting is particularly relevant because improper exposure settings can exacerbate or diminish the visibility of the flicker, as underexposed or overexposed images may render flickering more noticeable.

Moreover, the *"gain setting"* is an amplification to be applied to an image signal captured by the image sensor. Higher gain settings increase the brightness of an image, which can also lead to an increase in noise or graininess in the image. In relation to the flicker correction, the gain setting is important as it may amplify the flicker caused by lighting fluctuations, making it more essential to account for when generating the flicker information.

Moreover, the *"white balance setting"* is a parameter that adjusts a colour temperature of an image to ensure that white objects appear neutral (i.e., pure white) under different lighting conditions. Different lighting conditions, such as incandescent, fluorescent, or LED lighting, can introduce color casts, which may affect perception of the flicker. Herein, adjusting the white balance setting is essential for ensuring that color discrepancies due to lighting-induced flicker are accurately detected and corrected.

Moreover, the *"focus distance setting"* affects a sharpness of an image. Out-of-focus areas can exhibit increased blur or halo effects, which may distort spatial features of the image, potentially impacting the accuracy of flicker detection and correction, particularly in regions where precise detail is required for identifying the flicker.

Moreover, the term *"Image Signal Processing setting"* refers to a configurations within the camera's Image Signal Processing (ISP) pipeline that process raw image data captured by an image sensor into a final usable image. This includes adjustments for noise reduction, sharpening, and contrast. Herein, the ISP settings are important to monitor and account for, as certain ISP settings or algorithms may exacerbate the flicker, requiring correction adjustments that consider both the ISP settings and an environment in which the image was captured. Moreover, the term *"Image Signal Processing algorithm"* refers to a computational process or set of instructions applied within the camera's ISP pipeline to transform raw sensor data into a processed image, correcting for various factors such as noise, color, and contrast. Herein, the ISP algorithm can play a role in managing how the system compensates for the flicker, as some algorithms may be more adept at reducing or amplifying certain types of distortions, including the flicker.

Moreover, the term *"lighting information"* refers to an information indicative of the at least an operational frequency of the one or more light sources (i.e., one or more light-emitting elements) present in the real-world environment where the two or more images are captured. The lighting information may include, but are not limited to, the at least an operational frequency of the one or more light sources, intensity variations, spectral composition, phase characteristics, and any temporal fluctuations in illumination. Such parameters influence the occurrence and severity of the flicker in the camera-captured images. Examples of the one or more light sources may include, but are not limited to, a display, a lamp, a tubelight, and an LED strip.

Herein, the at least one processor is configured to process both sets of information and integrates them to generate the flicker information. This flicker information accounts for both the camera settings and the lighting conditions that can influence how the flicker appears in the camera-captured images. The flicker information is then used to apply the correction techniques to reduce or eliminate an identified flicker. A technical effect of integrating both the camera settings and the lighting information allows for a more precise and context-aware flicker correction, leading to improved image quality across varying lighting conditions. It will also be appreciated that such an approach enhances robustness of the flicker correction by adapting to different camera configurations and environmental lighting scenarios, thereby reducing artifacts and improving the visual consistency of processed images.

Optionally, the lighting information is indicative also of at least one of: spectral characteristics, brightness level information, dynamic operation information, spatial emission characteristics, of the one or more light sources, and/or of an environmental light context. In this regard, the term *"spectral characteristics"* refers to a distribution of light intensity across different wavelengths emitted by the one or more light sources in a real-world environment. Herein, the spectral characteristics influence how the flicker appear in the camera-captured images, particularly under mixed lighting conditions where different spectral components interact, potentially causing chromatic flicker distortions. Moreover, the term *"brightness level information"* of one or more light sources refers to an intensity of light emitted by the one or more light sources. The one or more light sources may operate across a wide range of brightness levels, from very dim to extremely bright. Herein, variations in the brightness level information can contribute to the flicker in the camera-captured images, particularly when the one or more light sources exhibit periodic fluctuations in intensity due to power supply variations or dimming mechanisms. Moreover, the term *"dynamic operation information"* of one or more light sources refers to information about the one or more light source's operation over time, such as whether the one or more light source is pulsing, flickering, or operating at a constant brightness. Herein, the dynamic operation information is essential for accurately correcting the flicker in the camera-captured images affected by temporally unstable lighting conditions.

Moreover, the term *"spatial emission characteristics"* of one or more light sources refers to a spatial distribution of light emitted by the one or more light sources. The spatial distribution may, for example, indicate whether the one or more light sources emit light uniformly or directionally. Herein, understanding the spatial emission characteristics helps in determining how the flicker vary across different regions of the camera-captured image, especially in cases where uneven illumination contributes to localized flicker distortions. Moreover, the term *"environmental light context"* of one or more light sources refers to information about surrounding lighting conditions of the one or more light sources. For example, the environmental light context could include information about poses of ambient light sources in the real-world environment, ambient light intensity, ambient light colour, light redirection properties of materials in the real-world environment, and similar. Herein, the environmental light context is essential for accurately assessing how different lighting conditions influence the flicker in the camera-captured images, enabling more effective flicker correction based on a comprehensive understanding of a scene illumination.

A technical effect of incorporating detailed lighting information enables a more comprehensive and adaptive flicker correction process, enabling the system to accurately compensate for complex lighting variations. Such an approach improves reliability of image processing applications, ensuring high-quality visual outputs across diverse lighting environments.

Optionally, the computer-implemented method further comprises reprojecting the two or more images to a common projection space, prior to the step of analyzing the at least one of: brightness variations, colour variations, contrast variations, in the two or more images. In this regard, said reprojecting refers to a process of transforming the two or more images into a unified spatial frame of reference, which is the common projection space. This transformation ensures that the two or more images are properly aligned in terms of their spatial geometry, regardless of differences in the camera settings or perspectives used during their capture. The common projection space may be defined based on a specific geometric model, such as a planar projection, spherical projection, or a 3D coordinate system. Reprojecting the two or more images may involve processing operations such as geometric transformations, warping, resampling of pixel data, and the like, to ensure that corresponding points in the real-world environment are aligned across the two or more images. It will be appreciated that performing the step of reprojecting ensures an accurate pixel-by-pixel comparison of the two or more images for accurately and reliably analysing the image properties indicative of the flicker in the two or more images.

A technical effect of reprojecting the two or more images to the common projection space reduces perspective distortions and spatial inconsistencies, enabling more precise detection and correction of the at least one of: brightness variations, color variations, contrast variations caused by the flicker. Such an approach enhances an accuracy of the flicker correction while ensuring that analysis of the two or more images is performed under uniform spatial conditions.

The present disclosure also relates to the system as described above. Various embodiments and variants disclosed above, with respect to the aforementioned computer-implemented method, apply *mutatis mutandis* to the system.

Optionally, the at least one camera is a part of a video see-through (VST) system of one of: an extended-reality (XR) device, a robotic device, a drone, a medical device, a heads-up display (HUD). In this regard, the term *"video see-through system"* refers to a system in which one or more cameras capture real-world scenes and display processed images on a screen, often overlaid with augmented information. The video see-through (VST) system is commonly implemented in the extended-reality (XR) devices, robotic systems, drones, medical devices, heads-up displays (HUDs), and similar, to provide a real-time composite view of both the real-world environment and digital enhancements. Moreover, the term *"extended-reality device"* refers to a wearable device designed to immerse the user in the XR environment. The term "extended-reality" encompasses virtual reality (VR), augmented reality (AR), mixed reality (MR), and the like. Such glasses often incorporate transparent or semitransparent lenses to overlay digital content onto a real world or provide a fully immersive view.

Moreover, the VST system in the robotic device enhances real-time visual perception by minimizing the flicker, ensuring accurate scene interpretation for improved autonomous operation and decision-making.

Moreover, the VST system in drones often includes video see-through capabilities for real-time object detection, stabilization, and flicker mitigation under varying lighting conditions. Moreover, the medical device incorporating the VST system may include surgical visualization systems, endoscopic imaging devices, augmented reality (AR)-assisted surgery tools, diagnostic imaging systems, and the like, that rely on accurate and flicker-free video feeds for enhanced medical precision. Moreover, the term "*heads-up display"* refers to a transparent or a semitransparent display that presents a visual information in a user's field of view without requiring them to look away from their primary task. The heads-up displays (HUDs) are used in applications such as aviation, automotive systems, and AR devices, and the like, where real-time visual overlays improve situational awareness. The video see-through HUD integrates the camera-captured images with digital overlays to enhance navigation, object recognition, and operational efficiency. The aforesaid types of devices are well-known in the art.

A technical effect of the aforementioned feature is that the system enhances visual accuracy and consistency of video see-through displays, ensuring flicker free rendering of real-world scenes in any one of: the XR device, the robotic device, the drone, the medical system, and the HUD. It will be appreciated that improving correction of the flicker in these devices enhances usability, operational safety, and effectiveness of augmented visual processing applications, particularly in dynamic lighting conditions.

Optionally, the at least one processor is further configured to:
receive capture information indicative of camera settings employed in the at least one camera for capturing the two or more images, wherein a camera setting comprises at least one of: an exposure setting, a gain setting, a white balance setting, a focus distance setting, an Image Signal Processing (ISP) setting, an ISP algorithm; and
receive lighting information indicative of at least an operational frequency of one or more light sources in the real-world environment,
wherein the step to generate the flicker information is based also on the capture information and the lighting information.

Optionally, the lighting information is indicative also of at least one of: spectral characteristics, brightness level information, dynamic operation information, spatial emission characteristics, of the one or more light sources, and/or of an environmental light context.

Optionally, the at least one processor is further configured to reproject the two or more images to a common projection space, prior to the step of analysing the at least one of: brightness variations, colour variations, contrast variations, in the two or more images.

Optionally, when applying the correction technique, the at least one processor employs at least one of:
an image correction algorithm,
a model trained at least for flicker correction,
a neural network trained at least for flicker correction,
to reduce the flicker in the at least one image.

### DETAILED DESCRIPTION OF THE DRAWINGS

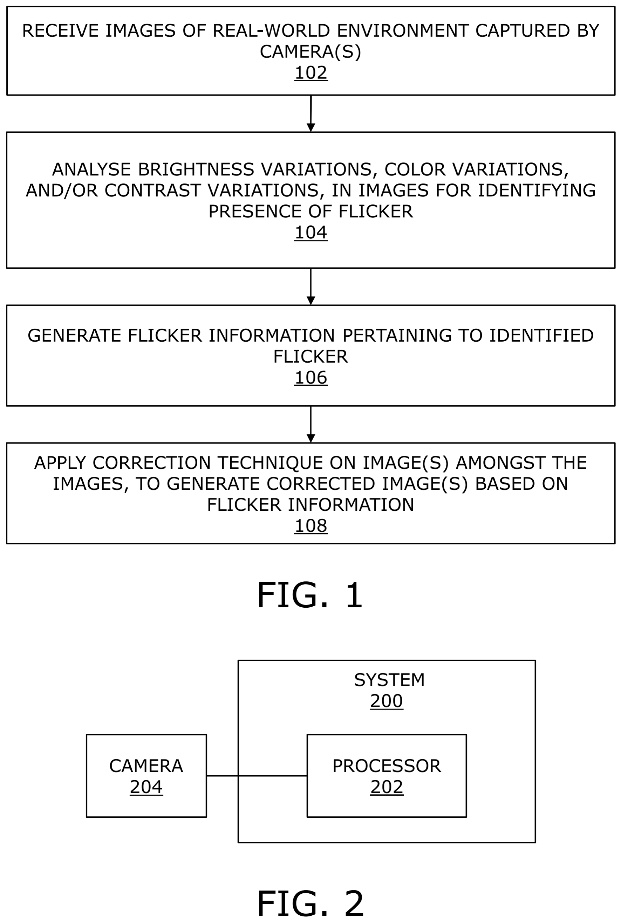

Referring to FIG. 1, illustrated are steps of a computer-implemented method for correcting flicker in camera-captured images, in accordance with an embodiment of the present disclosure. At step **102,** two or more images of a real-world environment are received that are captured by at least one camera. At step **104,** at least one of: brightness variations, colour variations, contrast variations, are analysed in the two or more images for identifying presence of a flicker in the two or more images. At step **106,** flicker information pertaining to the identified flicker is generated, based at least one on said analysis, wherein the flicker information comprises at least one of: a frequency, an amplitude, a phase, a location, of the flicker. At step **108,** a correction technique is applied on at least one image amongst the two or more images for generating at least one corrected image, based on the flicker information.

The aforementioned steps are only illustrative and other alternatives can also be provided where one or more steps are added, one or more steps are removed, or one or more steps are provided in a different sequence without departing from the scope of the claims herein.

Referring to FIG. 2, illustrated is a block diagram of a system **200** for correcting flicker in camera-captured images, in accordance with an embodiment of the present disclosure. Herein, the system **200** comprises at least one processor (depicted as a processor **202).** The processor **202** is communicably coupled to at least one camera (depicted as a camera **204).** The processor **202** is configured to perform various processing operations, as described earlier with respect to the aforementioned first aspect.

It may be understood by a person skilled in the art that the FIG. 2 includes a simplified architecture of a system **200** for sake of clarity, which should not unduly limit the scope of the claims herein. The person skilled in the art will recognize many variations, alternatives, and modifications of embodiments of the present disclosure.

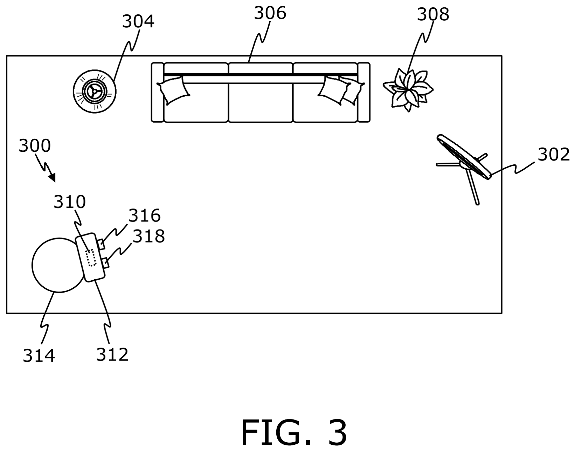

Referring to FIG. 3, illustrated is an exemplary schematic illustration of a real-world environment where a system **300** for correcting flicker in camera-captured images is used, in accordance with an embodiment of the present disclosure. The real-world environment is shown, for example, as an indoor environment (such as a living room of a house). In this regard, the real-world environment has arranged therein one or more light sources (for example, depicted as light sources **302** and **304),** as well as non-light sources **306** and **308.** The light source **302** is a light-emitting ring light whereas the light source **304** is a lamp. The system **300** comprises at least one processor (depicted as a processor **310).** The processor **310** is arranged in an extended-reality (XR) device **312** worn by a user on the user's head **314.** The processor **310** is communicably coupled to at least one camera (depicted as cameras **316** and **318)** arranged to capture images of the real-world environment. In this example, the cameras **316** and **318** are also shown to be arranged on the XR device **312.**

FIG. 3 is merely an example, which should not unduly limit the scope of the claims herein. A person skilled in the art will recognise many variations, alternatives, and modifications of embodiments of the present disclosure. As an example, the processor **310** may be arranged in a computational device (not shown) associated with the XR device **312.**

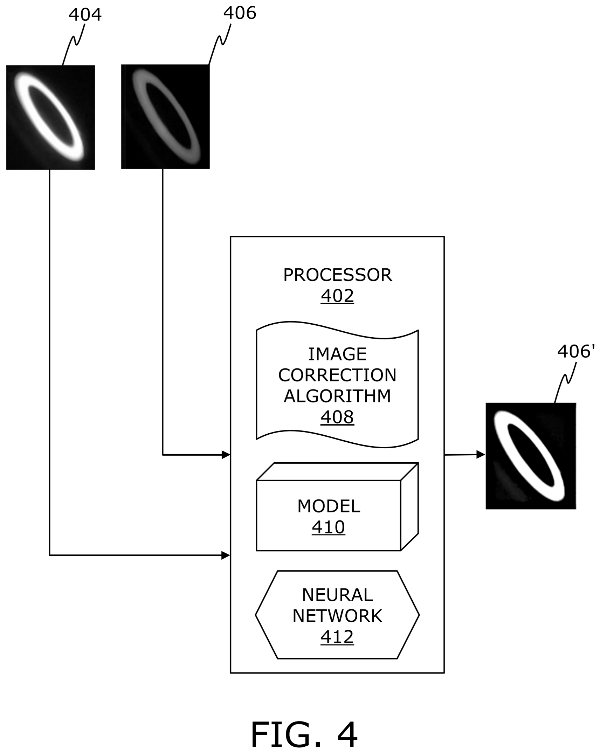

Referring to FIG. 4, illustrated is an exemplary illustration of how a correction technique is applied for correcting flicker in camera-captured images, in accordance with an embodiment of the present disclosure. A processor **402** receives two or more images (depicted as images **404** and **406)** of a real-world environment, wherein the images **404** and **406** are captured by at least one camera (not shown for the sake of clarity). The processor **402** applies a correction technique on at least one image (for example, such as the image **406)** amongst the images **404** and **406,** to generate at least one corrected image (depicted as the corrected image **406').** The correction technique is applied based on generated flicker information. When applying the correction technique, the processor **402** employs at least one of: an image correction algorithm **408,** a model **410** trained at least for flicker correction, a neural network **412** trained at least for flicker correction, for reducing the flicker in the image **406.**

FIG. 4 is merely an example, which should not unduly limit the scope of the claims herein. A person skilled in the art will recognize many variations, alternatives, and modifications of embodiments of the present disclosure.

## Claims

1. A computer-implemented method for correcting flicker in camera-captured images, said method comprising:
receiving two or more images (404, 406) of a real-world environment that are captured by at least one camera (204, 316, 318);
analysing at least one of: brightness variations, colour variations, contrast variations, in the two or more images for identifying presence of a flicker in the two or more images;
generating flicker information pertaining to the identified flicker, based at least one on said analysis, wherein the flicker information comprises at least one of: a frequency, an amplitude, a phase, a location, of the flicker; and
applying a correction technique on at least one image (406) amongst the two or more images for generating at least one corrected image (406'), based on the flicker information.

2. The computer-implemented method of claim 1, wherein the flicker in the two or more images (404, 406) corresponds to a representation of at least one of: a light source (302, 304), a reflection of the light source, an object or its portion illuminated by the light source, a shadow of the object or its portion illuminated by the light source, in the two or more images.

3. The computer-implemented method of any of the preceding claims, further comprising:
receiving capture information indicative of camera settings employed in the at least one camera (204, 316, 318) for capturing the two or more images (404, 406), wherein a camera setting comprises at least one of: an exposure setting, a gain setting, a white balance setting, a focus distance setting, an Image Signal Processing (ISP) setting, an ISP algorithm; and
receiving lighting information indicative of at least an operational frequency of one or more light sources (302, 304) in the real-world environment,
wherein the step of generating the flicker information is based also on the capture information and the lighting information.

4. The computer-implemented method of claim 3, wherein the lighting information is indicative also of at least one of: spectral characteristics, brightness level information, dynamic operation information, spatial emission characteristics, of the one or more light sources (302, 304), and/or of an environmental light context.

5. The computer-implemented method of any of the preceding claims, further comprising reprojecting the two or more images (404, 406) to a common projection space, prior to the step of analysing the at least one of: brightness variations, colour variations, contrast variations, in the two or more images.

6. The computer-implemented method of any of the preceding claims, wherein the step of applying the correction technique comprises employing at least one of:
an image correction algorithm (408),
a model (410) trained at least for flicker correction,
a neural network (412) trained at least for flicker correction,
for reducing the flicker in the at least one image (406).

7. The computer-implemented method of claim 6, further comprising
training the model (410) using a training dataset comprising
erroneous images having reference flicker present therein, and
ground truth images corresponding to the erroneous images,
wherein said training comprises employing a supervised learning technique for determining one or more flicker correction adjustments, which when applied to the erroneous images, mitigate the reference flicker to make the erroneous images consistent with their corresponding ground truth images.

8. The computer-implemented method of claim 6, further comprising training the neural network (412) at least for flicker correction, wherein upon training, the neural network implements the step of applying the correction technique by:
identifying a set of features in the at least one image (406) which relate to the flicker;
reducing a spatial dimension of the at least one image while retaining one or more features amongst the set of features in the at least one image;
processing the one or more features for learning spatial and contextual relationships therebetween and how said relationships impact flicker correction; and
applying one or more corrections that enable the flicker correction, on the at least one image, based on said relationships and their impact on the flicker correction.

9. A system (200, 300) for correcting flicker in camera-captured images, the system comprising at least one processor (202, 310, 402) configured to:
receive two or more images (404, 406) of a real-world environment that are captured by at least one camera (204, 316, 318), wherein the at least one processor is communicably coupled to the at least one camera;
analyse at least one of: brightness variations, colour variations, contrast variations, in the two or more images to identify presence of a flicker in the two or more images;
generate flicker information pertaining to the identified flicker, based at least one on said analysis, wherein the flicker information comprises at least one of: a frequency, an amplitude, a phase, a location, of the flicker; and
apply a correction technique on at least one image (406) amongst the two or more images to generate at least one corrected image (406'), based on the flicker information.

10. The system (200, 300) of claim 9, wherein the at least one camera (204, 316, 318) is a part of a video see-through (VST) system of one of: an extended-reality (XR) device (312), a robotic device, a drone, a medical device, a heads-up display (HUD).

11. The system (200, 300) of any of claims 9-10, wherein the at least one processor (202, 310, 402) is further configured to:
receive capture information indicative of camera settings employed in the at least one camera (204, 316, 318) for capturing the two or more images (404, 406), wherein a camera setting comprises at least one of: an exposure setting, a gain setting, a white balance setting, a focus distance setting, an Image Signal Processing (ISP) setting, an ISP algorithm; and
receive lighting information indicative of at least an operational frequency of one or more light sources (302, 304) in the real-world environment,
wherein the step to generate the flicker information is based also on the capture information and the lighting information.

12. The system (200, 300) of claim 11, wherein the lighting information is indicative also of at least one of: spectral characteristics, brightness level information, dynamic operation information, spatial emission characteristics, of the one or more light sources (302, 304), and/or of an environmental light context.

13. The system (200, 300) of any of claims 9-12, wherein the at least one processor (202, 310, 402) is further configured to reproject the two or more images (404, 406) to a common projection space, prior to the step of analysing the at least one of: brightness variations, colour variations, contrast variations, in the two or more images.

14. The system (200, 300) of any of claims 9-13, when applying the correction technique, the at least one processor (202, 310, 402) employs at least one of:
an image correction algorithm (408),
a model (410) trained at least for flicker correction,
a neural network (412) trained at least for flicker correction,
to reduce the flicker in the at least one image (406).

15. A computer program product comprising a non-transitory machine-readable data storage medium having stored thereon program instructions that, when executed by at least one processor (202, 310, 402), cause the at least one processor to implement steps of the computer-implemented method of any of claims 1-8.
